# EUROPEAN PATENT SPECIFICATION

(11) **EP 3 095 006 B1**
(45) Date of publication and mention of the grant of the patent: **02.05.2018**
(21) Application number: 15705701.9
(22) Date of filing: 09.01.2015
(51) Int. Cl.: G02C 5/00

(54) **SPECTACLE FRAME WITH AUTOMATIC OPENING AND CLOSING MECHANISM OF THE ARMS**
BRILLENFASSUNG MIT AUTOMATISCHEM ÖFFNUNGS- UND SCHLIESSMECHANISMUS DER BÜGEL
MONTURE DE LUNETTES À MÉCANISME D'OUVERTURE ET DE FERMETURE AUTOMATIQUE DES BRANCHES

(30) Priority: 17.01.2014 IT PD20140009
(43) Date of publication of application: 23.11.2016
(73) Proprietor: Celegon, Alberto, 35035 Mestrino (PD) (IT)
(72) Inventor: Celegon, Alberto, 35035 Mestrino (PD) (IT)
(74) Representative: Locas, Davide
(86) International application number: PCT/IB2015/050175
(87) International publication number: WO 2015/107441

(56) References cited:
- WO-A1-97/03379
- WO-A1-97/22035
- DE-B- 1 215 956
- US-A- 3 586 425
- US-A- 4 932 771
- US-B2- 6 776 484

## Description

### Technical field

The present invention relates to a mount for spectacles, in particular of the type comprising a mechanism for opening and closing the arms.

### Technological background

In the particular technical field,_spectacles and relative mounts are known which enable alternately the opening or closing of the two spectacle arms.
US 4 932 771 discloses a mount for spectacles with automatic opening in which the arms are opened by a resilient member.
US 5 162 824 discloses a spectacle lens structure comprising sliding rear lens in which each arm comprises a motor which moves the rear lenses with respect to the fixed front lenses.
WO1997 003379 discloses a hinge for the automatic closure of spectacle lens comprising a resilient device
WO1997 022035 also discloses a system for the mechanical closure of spectacle arms comprising resilient means
US 6 776 484 discloses spectacles with a mechanism for the automatic opening of the arms with a frame with control means. These control means comprise locking means which make it possible to lock the arm against the frame and actuation means which, when operated, make it possible to release the arm so that there is an angle of a non-zero value between the arm and the frame. Automatic mechanical frames are not able, however, to enable, both the opening and closing of the arms whereas it would be desirable to enable both functions.

It will be appreciated that there are situations in which it is not possible to carry out actions requiring a degree of manual dexterity - for instance when driving a vehicle - and this capacity may be useful in all cases in which a person is unable to use both hands.

### Summary of the invention

The main object of the invention is to provide a mount for spectacles comprising a pair of rotary arms at respective hinges in order to provide a solution that is different and original with respect to known solutions for the automatic opening and closing of the arms in particular providing a solution enabling both the automatic opening and closing of the spectacle arms by the same mechanism. These objects are achieved by a spectacle mount according to claim 1.

The object described above and others which will be describe in detail below are achieved by a spectacle mount according to the accompanying claims. In the following description and in the claims the term "rod" is used in the sense of "cable".

### Brief description of the drawings

Further features and advantages of the invention are set out in the following detailed description of a preferred embodiment thereof shown, by way of nonlimiting example, with reference to the accompanying drawings in which
- Fig.1 is a top view of a spectacle frame embodied in accordance with the present invention in which the arms of the frame are in an open configuration;
- Fig. 2 is a top view of the frame of Fig. 1 in which the arms of the frame are in a closed configuration;
- Fig. 3 is an axonometric view of a detail of the frame, i.e. the point of connection of the bar to the arm, three possible embodiments of which are shown.

### Detailed description of the invention

In the accompanying drawings, a spectacle frame embodied in accordance with the present invention is shown overall by 8 and comprises a front frame 11, in which respective seats for housing lens are defined (not shown) with a first rotary arm9 and a second rotary arm 12 at a pair of respective hinges 14' and 14 preferably disposed at respective opposite surfaces of the front frame 11. This frame 8 comprises a first pin 5 in the vicinity of a first hinge 14. The pin 5 is preferably secured to the front frame 11 and, in a preferred embodiment, the pin 5 may rotate, i.e. it may rotate about its own axis.

The frame of the invention comprises a longitudinal drive member 2 extending between the opposite faces of the front frame 11 over two substantially parallel sections 2a, 2b.

In a preferred embodiment, the drive member 2 extends from a second hinge 14' of said pair of hinges 14 to the first hinge 14, is wound by at least half a turn on the pin 5 and extends from there to the second hinge 14'. In this way, the drive member 2 is disposed on the two sections, 2a and 2b, and it is capable of sliding.

Said drive member is preferably disposed within guides 3 and 6 rigid with the front frame 11 and disposed above it, which will be described in further detail below.

In a preferred embodiment of the invention, the drive member is closed as a ring. In a more preferred embodiment, the drive member is a ring and the frame further comprises a second pin 13 disposed in the vicinity of the hinge 14' opposite the pin 5, around which the pin 13 of the drive member 2 is wound. The pin 14 may be fixed or rotary and is preferably rotary. In a more preferred embodiment, both the pin 5 and the pin 13 are rotary and their rotation causes the drive member 2 to slide. The pin 13 my also be provided with a rod which projects from the pin 13 and enables the user to rotate the pin 13.

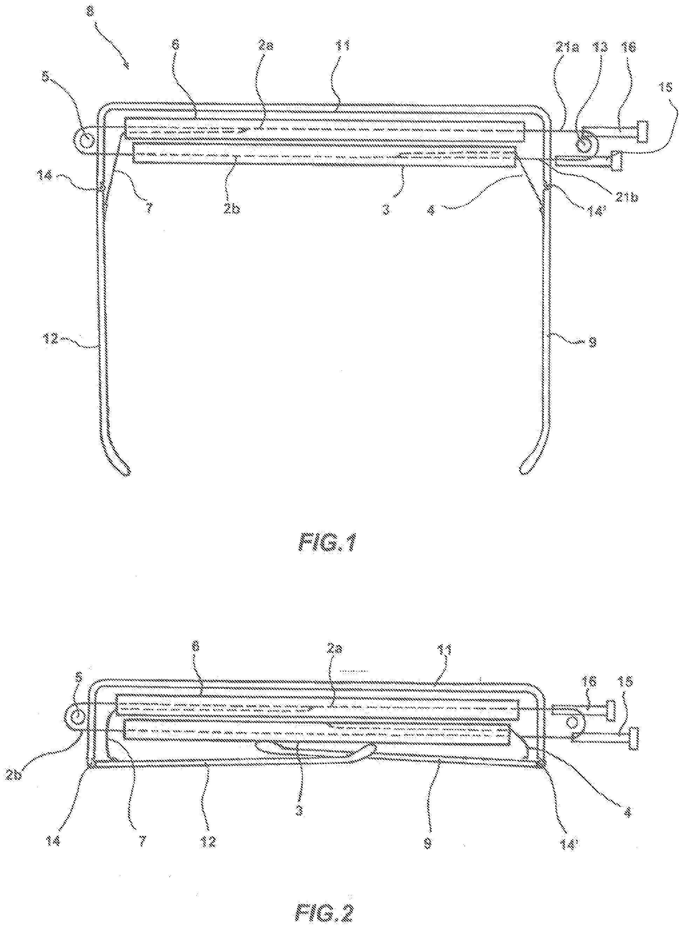

In a preferred embodiment, the frame also comprises actuation means disposed in the vicinity of the hinge 14' opposite the pin 5 and associated with the drive member 2 so as to cause it to slide in its direction of longitudinal extension with respect to the front frame 11. In a more preferred embodiment, there are two drive means (15 and 16) and each is connected to a respective end 21a, 21b of each section 2a, 2b of the drive member 2. With reference to Fig. 1, for instance, the means 15 is connected to the section 2b of the drive member and the means 15 is connected to the section 2a of the drive member. Each actuation means may be actuated by the user of the frame by causing the sliding of the drive member. In the preferred embodiment in which the drive member is a ring, the actuation means internally comprise the pin 13.

Moreover, again with reference to a preferred embodiment, the actuation means are formed by a pair of cylinders respectively connected to the ends 21a and 21b of the drive member 2. It will be appreciated that in this embodiment, the drive member 2 is closed as a ring and the two ends 21a and 21b are thus defined by respective portions thereof. It will also be appreciated that use could also be made of an open drive member 2, in which the respective ends 21a, 21b are connected to each cylinder.

It should also be borne in mind that use could be made of different actuation means based for instance on other rotation, thrust or spring or lever mechanisms. For instance, as mentioned above, in an alternative embodiment, the actuation means may comprise a rod connected to the pin 13 which enables its rotation.

In addition, the actuation means could also comprise mechanisms disposed on both sides of the frame, for instance with the mechanism of one side dedicated to the opening and the other to the closing of the rods, or both dedicated to both opening and closing.

The frame of the invention is further characterized in that it comprises two rods 4, 7 each connected to a respective section of the drive member and connected to a respective arm so that when the drive member slides, each rod moves the rod connected therewith from an open to a closed configuration and vice versa. To that end, each of the rods 4, 7, has a first end connected to a respective arm 9, 12 in a distal position with respect to the respective hinge 14', 14 and a second end associated slidably with the frame 8.

According to a preferred embodiment, again with reference to Fig. 1, the section of the drive member 2a has a rod 7 whose first end is connected to the section of the drive member 2a and whose second end is connected to an arm 12. In the same way the section of the drive member 2b has a rod 4 having its first end connected to the section of the drive member 2b and its second end connected to the arm 9.

When the drive member 2 moves, the rods 4 and 7 move, displacing the arms 9 and 12 to which they are respectively connected.

In a preferred embodiment of the invention, the respective section of the drive member 2 and a portion of the rod respectively connected to said section of the drive member are disposed within the guides 3 and 6.

As a result of the structural and functional identity of the two sections of the drive member and rods and arms connected respectively thereto, structure and operation will be described in detail with respect to only one of them.

The rod 7 is connected to the section 2a of the drive member such that traction may be transmitted to the rod by sliding of the drive member in both directions. The opposite end of the rod 7 is connected to the arm 12.

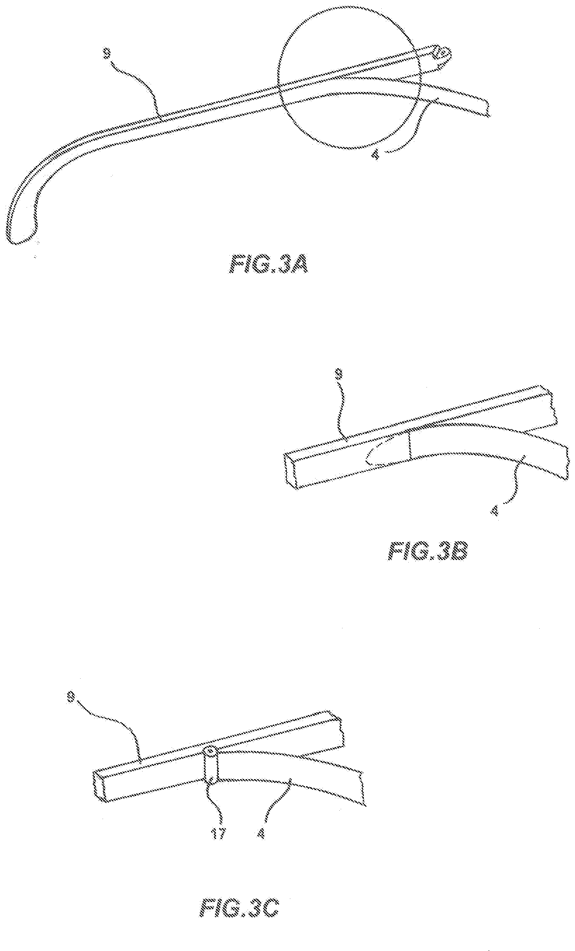

The rod 7 may be connected to the arm 12 by adhesion or welding of the end of the rod at the desired point of the arm, as shown diagrammatically in Fig. 3A and 3B respectively, or by a pin 17, preferably rotary, shown in Fig. 3C.

The rods 4, 7 are of material which provides them with properties of elasticity and flexibility. They are preferably of plastics or thin metal. As a result of these properties of elasticity and flexibility, the rods can bend and move in a sufficiently resilient manner to follow the movement of the arms during their opening and their closing operation.

As mentioned above, the rod 7 is connected to the respective arm 12 in a position slightly spaced from the respective hinge 14 so a to provide a leverage system and enable the rotation of the arm about the hinge 14.

When the drive member 2 slides, the arm 12, under the action of the rod 7 displaces and in turn moves the arm 12 to which it is connected.

When the drive member 2 slides, the rod 12, under the action of the rod 7, moves from an open to a closed configuration depending on its starting configuration.

The above description applies identically to the branch of the drive member 2b, the rod 4 connected thereto, the arm 9 connected thereto and the respective guide 3.

Fig. 1 shows the open configuration of the frame 8 in which both the arms 9 and 12 form an angle of approximately 90° to the front frame 11. This configuration is obtained by causing the drive member 2 to slide so as to move both the rods 4 and 7 externally. The external movement of the rods causes the movement of the arms connected thereto, 9 and 12 respectively, bringing them both from a closed configuration to an open configuration. The guides 3 and 6 are also shown in the drawing. The section of the drive member 2b and a portion of the respective rod 4 slide in the guide 3. The section of the guide member 2a and a portion of the respective rod 7 slides in the guide 6.

Fig. 2 shows the closed configuration of the frame 8 in which the arms 9 and 12 are folded towards the front frame 11. This configuration is obtained by causing the drive member to slide so as to move both the rods internally. The internal movement of the rods causes the arm connected thereto, respectively 9 and 12, to move bringing them both from an open to a closed congguriion.

Lastly, it will be appreciated that hinges 14 and 14' may be provided with a certain degree of elasticity so a to enable the arms to move in a resilient and flexible way but in particular to enable a snap movement between of the arms between the open and closed positions. By way of example, use could be made of hinges 111 of a type similar to those disclosed in US 4 991 258.

The invention thus achieves the stated objects and offers many advantages in respect of other known solutions. In particular, a first advantage of the frame disclosed is that it comprises a mechanism making it possible to both open and close, depending on the starting configuration, both arms of the spectacles by means of the same mechanism.

A second advantage of the frame of the invention is that it avoids the need for spring members which readily deteriorate over time.

## Claims

1. A mount (8) for spectacles comprising a front frame (11) and a pair of rotary arms (9,12) connected in a rotatable manner to the front frame (11) at respective hinges (14, 14'), and further comprising:
a. a pair of rods (4, 7) each having a first end connected to a respective arm (9, 12) in a distal position with respect to the respective hinge (14, 14') and a second end associated in a sliding manner with the front frame (11);
b. actuation means for the rods (4, 7) designed to actuate the rods (4, 7) in a pushing/pulling movement such as to control the rotation of the arms (9, 12) about the hinges (14,14'),
c. a driving member (2) comprising two elongate sections (2a, 2b) and extending between opposite faces of the front frame (11) along the two substantially parallel elongate sections (2a, 2b), each rod (4, 7) being connected to a respective elongate section (2a, 2b) of the driving member (2) and connected to a respective arm (9, 12) so that when the drive member (2) slides, each rod (4, 7) moves the respective arm connected therewith from an open to a closed configuration and vice versa.

2. A mount for spectacles according to claim 1, wherein the actuation means is designed to act on the driving member (2) in order to push/pull out the rods by means of the movement of the driving member in its direction of longitudinal extension.

3. A mount for spectacles according to claim 1 or 2, further comprising a first pin (5) disposed in the vicinity of a first hinge (14), the driving member (2) extending from a second hinge (14') opposite said pin (5) to the first hinge (14), and being wound on said pin (5), in order to define said sections (2a, 2b).

4. A mount for spectacles according to claim 3, wherein the pin (5) is rotatable.

5. A mount for spectacles according to any one of claims 2 to 4, wherein the driving member (2) is a closed loop.

6. A mount for spectacles according to any one of claims 3 to 5, wherein the mount further comprises a second pin (13) disposed in the vicinity of the hinge opposite said first pin (5) on which the driving member (2) is wound.

7. A mount for spectacles according to claim 6, wherein both the first pin (5) and the second pin (13) are rotatable.

8. A mount for spectacles according to any one of the preceding claims, wherein the actuation means are disposed in the vicinity of the hinge opposite said first pin (5) and connected to the driving member (2).

9. A mount for spectacles according to any one of the preceding claims, further comprising at least one guide integral with the front frame in which the driving member(2) is housed.

10. A mount for spectacles according to claim 9, comprising two guides (3, 6) each of which houses a section of the driving member (2a, 2b) and a portion of the rod respectively connected to said section of the driving member.

11. A mount for spectacles according to any one of the preceding claims, wherein the rods (4, 7) are connected to the respective arms (9, 12) in the vicinity of the respective hinges (14, 14').

## Patentansprüche

1. Befestigung (8) für Brillen mit einem Vorderrahmen (11) und einem Paar von Dreharmen (9, 12), die drehbeweglich mit dem Vorderrahmen (11) an jeweiligen Gelenken (14, 14') verbunden sind, und ferner aufweist:
a. ein Paar von Stangen (4, 7), wobei jede ein erstes Ende, das mit einem jeweiligen Arm (9, 12) in einer distalen Position bezüglich des jeweiligen Gelenks (14, 14') verbunden ist, und ein zweites Ende aufweist, das gleitend mit dem Vorderrahmen (11) verbunden ist;
b. eine Betätigungseinrichtung für die Stangen (4, 7), die eingerichtet ist, um die Stangen (4, 7) in einer Drück-/Zieh-Bewegung zu betätigen, um so die Drehung der Arme (9, 12) um die Gelenke (14, 14') herum zu steuern,
c. ein Antriebselement (2), das zwei längliche Abschnitte (2a, 2b) aufweist und sich zwischen gegenüberliegenden Flächen des Vorderrahmens (11) entlang der beiden im Wesentlichen parallelen länglichen Abschnitte (2a, 2b) erstreckt, wobei jede Stange (4, 7) mit einem jeweiligen länglichen Abschnitt (2a, 2b) des Antriebselements (2) und mit einem jeweiligen Arm (9, 12) verbunden ist, so dass, wenn das Antriebselement (2) gleitet, jede Stange (4, 7) den jeweiligen Arm, der damit verbunden ist, von einer offenen zu einer geschlossenen Konfiguration und umgekehrt bewegt.

2. Befestigung für Brillen gemäß Anspruch 1, wobei die Betätigungseinrichtung eingerichtet ist, um auf das Antriebselement (2) zu wirken, um die Stangen mittels der Bewegung des Antriebselements in ihre Richtung einer Längsausdehnung zu drücken/ziehen.

3. Befestigung für Brillen gemäß Anspruch 1 oder 2, die ferner einen ersten Stift (5) aufweist, der in der Umgebung eines ersten Gelenks (14) angeordnet ist, wobei sich das Antriebselement (2) von einem zweiten Gelenk (14'), das dem Stift (5) gegenüber liegt, zum ersten Gelenk (14) erstreckt, und auf dem Stift (5) aufgewickelt ist, um die Abschnitte (2a, 2b) zu bilden.

4. Befestigung für Brillen gemäß Anspruch 3, wobei der Stift (5) drehbeweglich ist.

5. Befestigung für Brillen gemäß einem der Ansprüche 2 bis 4, wobei das Antriebselement (2) eine geschlossene Schleife ist.

6. Befestigung für Brillen gemäß einem der Ansprüche 3 bis 5, wobei die Befestigung ferner einen zweiten Stift (13) aufweist, der in der Umgebung des Gelenks, das dem ersten Stift (5) gegenüber liegt, auf dem das Antriebselement (2) aufgewickelt ist, angeordnet ist.

7. Befestigung für Brillen gemäß Anspruch 6, wobei sowohl der erste Stift (5) als auch der zweite Stift (13) drehbeweglich sind.

8. Befestigung für Brillen gemäß einem der vorhergehenden Ansprüche, wobei die Betätigungseinrichtung in der Umgebung des Gelenks, das dem ersten Stift (5) gegenüber liegt, angeordnet und mit dem Antriebselement (2) verbunden ist.

9. Befestigung für Brillen gemäß einem der vorhergehenden Ansprüche, die ferner zumindest eine Führung aufweist, die einstückig mit dem Vorderrahmen ist, in dem das Antriebselement (2) aufgenommen ist.

10. Befestigung für Brillen gemäß Anspruch 9, die zwei Führungen (3, 6) aufweist, wobei jede von ihnen jeweils einen Abschnitt des Antriebselements (2a, 2b) und einen Bereich der Stange aufnimmt, der mit dem Abschnitt des Antriebselements verbunden ist.

11. Befestigung für Brillen gemäß einem der vorhergehenden Ansprüche, wobei die Stangen (4, 7) mit den jeweiligen Armen (9, 12) in der Umgebung der jeweiligen Gelenke (14, 14') verbunden sind.

## Revendications

1. Monture (8) pour lunettes comprenant un bâti avant (11) et une paire de branches rotatives (9, 12) raccordées, d'une manière rotative, au bâti avant (11) au niveau de charnières (14, 14') respectives, et comprenant en outre :
a. une paire de tiges (4, 7) ayant chacune une première extrémité raccordée à une branche (9, 12) respective dans une position distale par rapport à la charnière (14, 14') respective et une seconde extrémité associée, d'une manière coulissante, avec le bâti avant (11) ;
b. des moyens d'actionnement pour les tiges (4, 7) conçus pour actionner les tiges (4, 7) dans un mouvement de poussée / traction afin de contrôler la rotation des branches (9, 12) autour des charnières (14, 14'),
c. un élément d'entraînement (2) comprenant deux sections allongées (2a, 2b) et s'étendant entre les faces opposées du bâti avant (11) le long des deux sections allongées (2a, 2b) sensiblement parallèles, chaque tige (4, 7) étant raccordée à une section allongée (2a, 2b) respective de l'élément d'entraînement (2) et raccordée à une branche (9, 12) respective de sorte que lorsque l'élément d'entraînement (2) coulisse, chaque tige (4, 7) déplace la branche respective raccordée à cette dernière d'une configuration ouverte à une configuration fermée et vice versa.

2. Monture pour lunettes selon la revendication 1, dans laquelle les moyens d'actionnement sont conçus pour agir sur l'élément d'entraînement (2) afin de pousser / tirer les tiges au moyen du mouvement de l'élément d'entraînement dans sa direction d'extension longitudinale.

3. Monture pour lunettes selon la revendication 1 ou 2, comprenant en outre une première broche (5) disposée à proximité d'une première charnière (14), l'élément d'entraînement (2) s'étendant à partir d'une seconde charnière (14') opposée à ladite broche (5) jusqu'à la première charnière (14) et étant enroulé sur ladite broche (5), afin de définir lesdites sections (2a, 2b).

4. Monture pour lunettes selon la revendication 3, dans laquelle la broche (5) peut tourner.

5. Monture pour lunettes selon l'une quelconque des revendications 2 à 4, dans laquelle l'élément d'entraînement (2) est une boucle fermée.

6. Monture pour lunettes selon l'une quelconque des revendications 3 à 5, dans laquelle la mouture comprend en outre une seconde broche (13) disposée à proximité de la charnière opposée à ladite première broche (5) sur laquelle l'élément d'entraînement (2) est enroulé.

7. Monture pour lunettes selon la revendication 6, dans laquelle à la fois la première broche (5) et la seconde broche (13) peuvent tourner.

8. Monture pour lunettes selon l'une quelconque des revendications précédentes, dans laquelle les moyens d'actionnement sont disposés à proximité de la charnière opposée à ladite première broche (5) et raccordés à l'élément d'entraînement (2).

9. Monture pour lunettes selon l'une quelconque des revendications précédentes, comprenant en outre au moins un guide solidaire avec le bâti avant dans lequel l'élément d'entraînement (2) est logé.

10. Monture pour lunettes selon la revendication 9, comprenant deux guides (3, 6), dont chacun loge une section de l'élément d'entraînement (2a, 2b) et une partie de la tige respectivement raccordée à ladite section de l'élément d'entraînement.

11. Monture pour lunettes selon l'une quelconque des revendications précédentes, dans laquelle les tiges (4, 7) sont raccordées aux branches (9, 12) respectives à proximité des charnières (14, 14') respectives.
